# EUROPEAN PATENT SPECIFICATION

(11) **EP 2 036 706 B1**
(45) Date of publication and mention of the grant of the patent: **07.11.2012**
(21) Application number: 07745281.1
(22) Date of filing: 14.06.2007
(51) Int. Cl.: B29D 30/48

(54) **PRODUCTION METHOD OF BEAD FILLER MATERIAL WITH BEAD CORE**
VERFAHREN ZUR HERSTELLUNG VON KERNREITERMATERIAL UND WULSTKERN
PROCÉDÉ DE FABRICATION DE MATÉRIAU DE REMPLISSAGE DE TALON AVEC NOYAU DE NERVURE

(30) Priority: 15.06.2006 JP 2006166316
(43) Date of publication of application: 18.03.2009
(73) Proprietor: Bridgestone Corporation, Tokyo 104-8340 (JP)
(72) Inventor: SHINO, Yoshikatsu, Kodaira-shi, Tokyo 187-8531 (JP)
(74) Representative: Oxley, Robin John George
(86) International application number: PCT/JP2007/062024
(87) International publication number: WO 2007/145284

(56) References cited:
- JP-A- 2003 039 570
- JP-A- 2003 334 866
- JP-A- 2004 161 000
- JP-A- 2005 153 145

## Description

### TECHNICAL FIELD

The present invention relates to a method for producing a bead filler material generally having a toric shape which is formed by helically winding and laminating an unvulcanized ribbon-like rubber strip having a width, for example, ranging from 5 to 20 mm on a rotatable base, and is attached to an outer circumference surface of a bead core such that the bead filler material gradually reduces its thickness toward an outer side in the radial direction.

### RELATED ART

As a method for producing a bead filler material formed by winding and laminating an unvulcanized ribbon-like rubber strip, it is known, for example, that a rubber strip is helically winded around the bead core having a ring shape often over multiple columns and layers on a building drum for a green tire or on an instrument which is independent of a building drum for a green tire to produce a bead filler material which has a thickness reducing toward an outer side in the radial direction and a given triangular cross-sectional shape, and is attached to an outer circumference surface of the bead core.

However, in the bead filler material thus produced, the ribbon-like rubber strip extends in the circumference direction, and its side edges of the rubber strip, which are exposed externally, also extends in the same direction. Therefore, when the bead filler material is attached to constructional elements of a tire such as carcass material, side rubber or the like to build a green tire, and when the green tire is vulcanized, there is a problem that air existing bead filler material and constructional elements of the tire adjacent to the bead filler material most likely cannot be smoothly discharged toward an outer or inner side in the radial direction because of an existence of the side edges of the exposed rubber strip extending helically or the like.

Meanwhile, when the bead filler material is integrally molded in a given cross-sectional contour shape by extrusion molding apparatus, roll molding apparatus or the like, as disclosed in JP6055659-A by the present applicant, grooves are formed by pressing linear projections of the molding roll against both of front and rear surfaces of a long bead filler material which is transferred by transportation means, and the bead filler material is arranged upon building a green tire with its grooves radially extending, so that air can be discharged smoothly through the grooves toward an inner and outer side in the radial direction, for example, during vulcanizing the green tire.

Document JP 2003039570 - A discloses a method of manufacturing a pneumatic tire having a bead apex rubber extending from a bead core to the outside of a radial direction in its bead. The bead apex has a non-smooth uneven region, e.g. a corrugated area, provided to the inner surface or outer surface thereof in a tire axis direction.

Document JP 2005153145 - A discloses a method of moulding the bead apex, whereby a rubber strip is extruded from an extruder. This rubber strip is spirally wound around the outer peripheral side of a bead core to be stacked, so as to control the rubber material so as to gradually reduce the cross-sectional area thereof.

### DISCLOSURE OF THE INVENTION

This molding roll of the prior art, however, can not be used for a bead filler material generally having a toric shape which is produced by helically winding the ribbon-like rubber strip around the bead core having ring shape over multiple columns and layers.

The invention, therefore, provides a method for producing a bead filler material with a bead core as defined in claim 1, in which the bead filler material is produced by winding and laminating the ribbon-like rubber strip and generally having a toric shape and linear grooves radially extending on a surface of one side in the thickness direction and contributing to smooth discharge of air are necessarily formed in conjunction with completing the production of the bead filler material.

A method for producing the bead filler material with the bead core according to the invention comprises helically winding and laminating the unvulcanized ribbon-like rubber strip, for example, over multiple columns and multiple layers around the bead core arranged concentrically and located on a rotatable base which may be, for example, a metal disk under a support by the rotatable base, while rotating the rotatable base and the bead core, and forming linear grooves on a contact surface with the rotatable base on whole circumference by transferring linear depressions or linear projections radially extending on the rotatable base.

In this method, sub linear depressions or sub linear projections crossing the linear depressions or linear projections may be arranged, as defined in claim 2, on the rotatable base, and sub linear grooves may be formed by transferring the sub linear depressions or the sub linear projections on the contact surface.

According to the invention, by helically winding and laminating the unvulcanized ribbon-like rubber strip on the rotatable base, preferably with a slight pressure against the surface of the rotatable base, the linear grooves as a transfer of the linear depressions or the linear projections on the surface of the rotatable base can be formed in a desired manner on a surface of one side of the bead filler material in conjunction with completing the production of the bead filler material. This can render a special equipment and a special equipment and a special process for post-processing formation of radial linear grooves on the bead filler material unnecessary and the bead filler material can be easily and inexpensively produced.

The bead filler material produced by this method enables, in a building and vulcanizing a green tire with the bead filler material being assembled, air to be smoothly discharged by an effect of the radially extending linear grooves toward an inner or outer side in the extending direction of the linear grooves despite an existence of helical side edges extending in the circumferential direction and can effectively prevent a generation of molding defect or the like of a tire.

Moreover, the bead filler material produced by this method has linear projections, which also function as reinforce ribs, between the radial linear grooves, so that bending or the like of the bead filler material can be effectively prevented at a side edge of the rubber strip when the bead filler material is removed from the rotatable base or the like.

### BRIEF DESCRIPTION OF THE DRAWINGS

FIG. 1 is a plain view showing an illustrative rotatable base that can be used for implementing the invention.
FIG. 2 is a cross-section view showing an illustrative configuration of the bead filler material.
FIG. 3 is an enlarged perspective view showing a relevant part of the bead filler material with the bead core as a product.

### DESCRIPTION OF REFERENCE NUMERALS

- 1: rotatable base
- 2: linear projection
- 3: bead core
- 4: ribbon-like rubber strip
- 5: bead filler material
- 6: linear groove

### BEST MODE FOR CARRYING OUT THE INVENTION

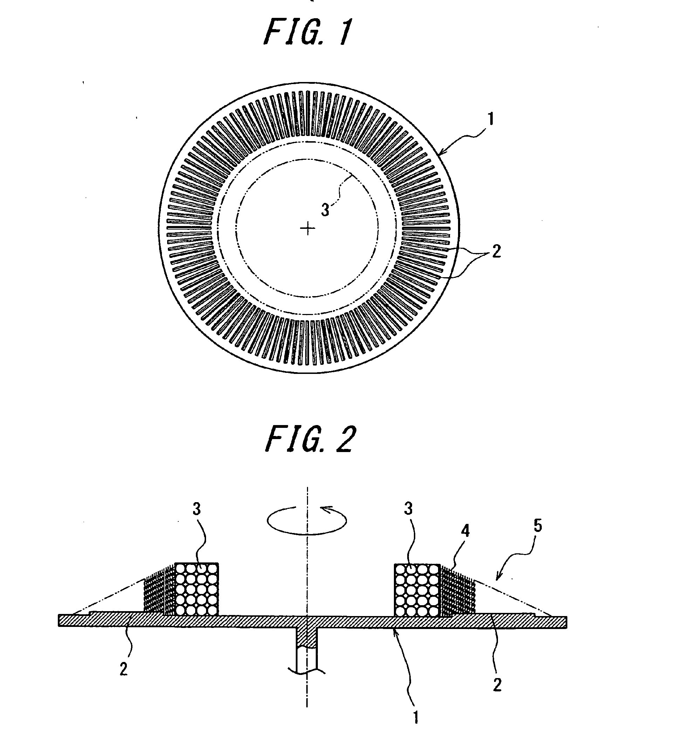

FIG. 1 is a plain view showing a rotatable base that can be used for implementing the invention.

For example, the rotatable base 1 which may be a round iron plate is provided with a number of radially extending linear depressions or projections, linear projections 2 in this figure, which are formed with given angle and interval over the whole circumference in an outer at one side in the radial direction correspond to the area where the unvulcanized ribbon-like rubber strip is winded and laminated as described hereinafter.

It is noted that the linear projections 2 may be formed over the whole surface of one side of the rotatable base 1, and alternatively formed within a limited area in the radial direction which is a little narrower than the area where the ribbon-like rubber strip is winded and laminated.
Meanwhile, preferably the projecting height of each linear projection 2 or the depth of linear depression ranges from 0.2 to 3.0 mm and preferably a number of the linear projections or depressions ranges from 18 to 114 per entire circumference.

Herein, in addition to the linear projections 2 or the linear depressions radially extending as discussed above, the rotatable base 1 may be provided with sub linear projections or sub linear depressions crossing the linear projections or depressions to form any pattern such as a cross ridge pattern or a grid pattern.

In carrying out the invention with using the rotatable base 1 mentioned above, the bead core having been formed in a ring shape and constructed from a bead structure such as a strand bead, a hexagonal bead, a cable bead or the like is concentrically arranged on the rotatable base radially inside of the area where the linear projections 2 are formed as represented by the dotted lines in FIG. 1. The bead core 3 is positioned on the rotatable base 1, for example, by means of magnetic attachment or the like, and then unvulcanized ribbon-like rubber strip having the width, for example, from 5 to 20 mm is helically winded and laminated around the bead core 3 over multiple columns and layers, as shown in a longitudinal sectional view containing a central axis line in FIG. 2, with the rotatable base 1 and the bead core 3 rotating about the central axis line, preferably with a pressure against the rotatable base 1 and the bead core 3.

It is noted that the term "multiple columns" used herein refers to a column-wise alignment of windings in the direction toward the central axis line of the bead core 3, and the term "multiple layer" refers to a lamination alignment of windings in the direction toward the radially outer side.

The ribbon-like rubber strip 4 is continuously winded helically and laminated in this way until the contour shape of the cross-section of the laminating layer becomes a given shape, for example, a triangular shape which gradually reduces its thickness toward an outer side in the radial direction as represented by the dotted lines in FIG. 2. In this way, a given bead filler material 5 attached around the bead score 3 is produced, and the linear grooves formed by transferring the linear projections 2 are provided over the whole circumference of the bead filler material on the contact surface of the bead filler material 5 with the rotatable base 1, in other words, on the attaching surface to the rotatable base 1.

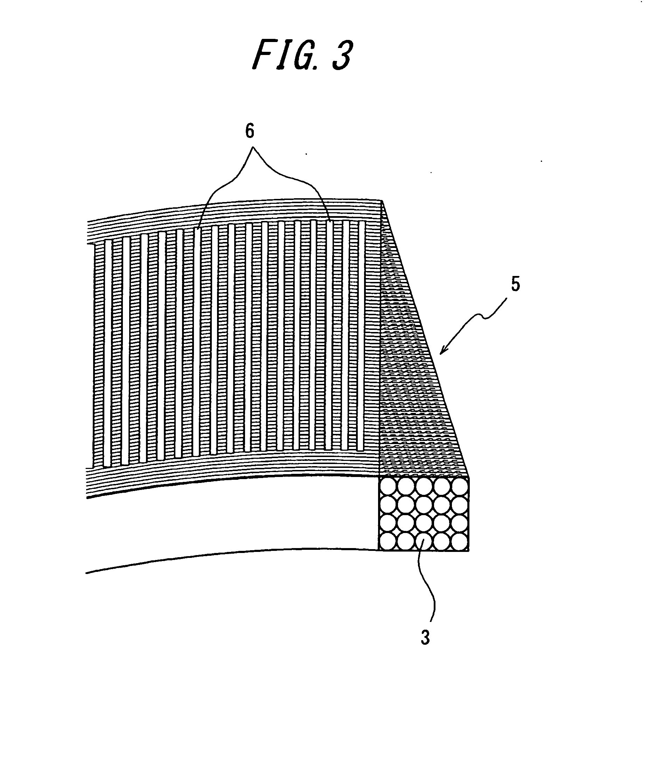

FIG. 3 is an enlarged cross-section perspective view showing a relevant part of the bead filler material with the bead core thus produced in the state that the bead filler material is removed from the rotatable base. On the contact surface of the bead filler material 5 with the rotatable base 1, there is provided linear grooves 6 formed by transferring the linear projections 2, in a shape and a size generally corresponding to those of the linear projections 2.

Therefore, when the bead filler material 5 is assembled to build a green tire, air existing, for example, between a carcass ply in which ply codes extend in the radial direction and the bead filler material 5 can be smoothly discharged toward an outer and inner side in the radial direction through the linear groove 6 regardless of the extending direction of side edges of the rubber strip.

In this case, when the sub linear grooves are formed on the surface of one side of the bead filler material 5 by transferring the sub linear depressions or the sub linear projections provided on the rotatable base 1 in addition to the linear groove 6 as described above, more air can be discharged more smoothly during building or vulcanizing a green tire.

Thereinbefore the embodiments of the invention are described with reference to the drawings. Optionally, for example, a mold provided with linear depressions or linear projections similar to the linear depressions or the linear projections formed on the rotatable base 1 may be applied to a surface of the bead filler material 5 not contacted with the rotatable base 1 produced on the rotatable base 1 to transfer them and form similar linear grooves extending in the radial direction on the noncontact surface. This can ensure smooth discharge of air from both sides of surfaces of the bead filler material.

## Claims

1. A method for producing a bead filler material with a bead core (3), wherein the bead core is concentrically arranged on a rotatable base (1), a ribbon-like rubber strip (4) is helically winded and laminated around the bead core, and linear grooves (6) radially extending on a contact surface of the bead filler material (5) with the rotatable base are formed on whole circumference of the bead filler material by transferring linear depressions (2) or linear projections (2) provided on the rotatable base (1).

2. The method for producing a bead filler material with a bead core according to claim 1, wherein sub linear depressions or sub linear projections crossing the linear depressions or the linear projections are provided on the rotatable base, and sub linear grooves are formed by transferring the sub linear depressions or the sub linear projections on the contact surface.

## Patentansprüche

1. Verfahren zur Herstellung eines Kernreitermaterials mit einem Wulstkern (3), wobei der Wulstkern konzentrisch auf einer drehbaren Basis (1) angeordnet ist, ein bandartiger Gummistreifen (4) spiralförmig um den Wulstkern gewickelt und laminiert ist und lineare Rillen (6), die sich radial auf einer Kontaktfläche des Kernreitermaterials (5) erstrecken, mit der drehbaren Basis auf dem gesamten Umfang des Kernreitermaterials durch Übertragen von linearen Vertiefungen (2) oder linearen Vorsprüngen (2) gebildet werden, die auf der drehbaren Basis (1) vorhanden sind.

2. Verfahren zur Herstellung eines Kernreitermaterials mit einem Wulstkern nach Anspruch 1, bei dem sublineare Vertiefungen oder sublineare Vorsprünge, die die linearen Vertiefungen oder die linearen Vorsprünge kreuzen, auf der drehbaren Basis vorhanden sind und sublineare Rillen durch Übertragen der sublinearen Vertiefungen oder der sublinearen Vorsprünge auf die Kontaktfläche gebildet werden.

## Revendications

1. Procédé de production d'un matériau de bourrage sur tringle avec une tringle (3), dans lequel la tringle est agencée de manière concentrique sur une base rotative (1), une bande de caoutchouc en forme de ruban (4) étant enroulée de manière hélicoïdale et stratifiée sur la tringle, et des rainures linéaires (6) s'étendant radialement sur une surface de contact du matériau de bourrage sur tringle (5) sur la base rotative étant formées sur l'ensemble de la circonférence du matériau de bourrage sur tringle par le transfert de creux linéaires (2) ou de saillies linéaires (2) agencés sur la base rotative (1).

2. Procédé de production d'un matériau de bourrage sur tringle avec une tringle selon la revendication 1, dans lequel des creux linéaires auxiliaires ou des saillies linéaires auxiliaires, croisant les creux linéaires ou les saillies linéaires, sont agencés sur la base rotative, des rainures linéaires auxiliaires étant formées par le transfert des creux linéaires auxiliaires ou des saillies linéaires auxiliaires sur la surface de contact.
